Europäisches Patentamt

European Patent Office

Office européen des brevets

(11) Publication number: **0 389 285**
**A2**

## EUROPEAN PATENT APPLICATION

(21) Application number: **90303099.7**

(22) Date of filing: **22.03.90**

(51) Int. Cl.⁵: **H04N 1/00**

(30) Priority: **22.03.89 JP 32278/89 U**

(43) Date of publication of application:
**26.09.90 Bulletin 90/39**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Fujita, Shuko, c/o Intellectual**
**Property Division**
**Kabushiki Kaisha Toshiba, 1-1-1, Shibaura**
**Minato-ku, Tokyo(JP)**

(74) Representative: **Freed, Arthur Woolf et al**
**MARKS & CLERK 57-60 Lincoln's Inn Fields**
**London WC2A 3LS(GB)**

(54) Facsimile apparatus.

(57) A facsimile apparatus comprises a scanner section (12) adapted for reading a document, an electrophotographic process section (31) adapted for forming a toner image on recording paper, an optical signal generating section (42) adapted for applying an optical signal to a photosensitive drum (34) in the electrophotographic process section (31), and a fixing section (35) adapted for fixing the toner image on the recording paper. In this facsimile apparatus, the positions of the scanner section (12), electrophotographic process section (31), optical signal generating section (42) and fixing section (35) are improved, thereby enabling a reduction in the size of the apparatus body and a reduction in the adverse effect of heat generated from the fixing section (35) on the optical signal generating section (42).

**FIG.1**

The present invention relates to a facsimile apparatus wherein an image is recorded through the use of an electrophotographic recording system.

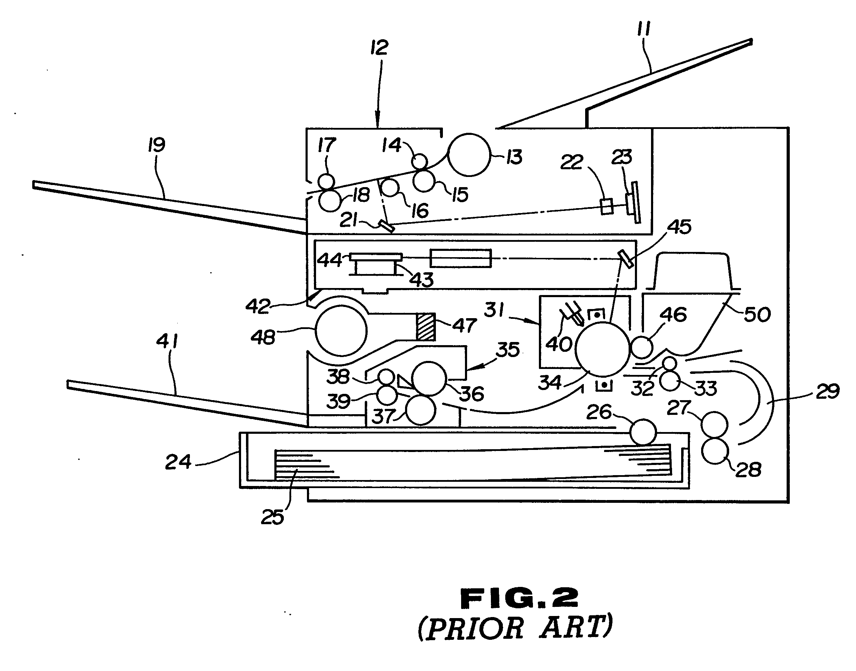

This type of conventional facsimile apparatus has a structure shown in Fig. 2. A reading system and a recording system in this apparatus will now be described.

In the reading system, a document placed on a paper feed table 11 is transferred through a scanner section 12 in the following order: a roller 13 → between rollers 14 and 15 → a roller 16 → between rollers 17 and 18. The document transferred through the above-described passage is discharged onto a document discharge tray 19. At that time, in the scanner section 12, the document being transferred in a sub-scanning direction is repeatedly read in a main scanning direction through a mirror 21 and a lens system 22 by means of a charge-coupled device image sensor (hereinafter referred to as "CCD image sensor") 23. This causes an image signal corresponding to an image of the document to be output from the CCD image sensor 23.

On the other hand, in the recording system, a piece of recording paper 25 housed in a casette 24 is taken out by a pick-up roller 26 and led to a U-turn guide 29 through between an automatic paper feed roller 27 and a separating roller 28. The recording paper is then passed through an electrophotographic process section 31 in the following order: between rollers 32 and 33 → a photosensitive drum 34. Further, the recording paper is transferred through a fixing section 35 in the following order between rollers for thermal fixation 36 and 37 → between rollers 38 and 39, and then discharged onto a recording paper discharge tray 41. At that time, in an optical signal generating section 42, an optical signal corresponding to the image signal is reflected by a polygon mirror 44 of an equilateral prism being rotated by a motor 43 and further reflected by a mirror 45 and applied onto the photosensitive drum 34. This causes the optical signal to be repeatedly applied in the main scanning direction to the photosensitive drum 34 being rotated with the transfer of the recording paper in the sub-scanning direction. The photosensitive drum 34 is electrified by a charger 40 and then exposed to the optical signal from the optical signal generating section 42, thereby forming a latent image. The latent image on the photosensitive drum 34 is developed by guiding a toner housed in a toner box 50 in the electrophotographic process section 31 to the photosensitive drum 34 with the rotation of the roller 46. A toner image formed by the development on the photosensitive drum 34 is transferred on the recording paper being conveyed along the photosensitive drum 34. Further, the recording paper is pressed and heated between the thermal fixing rollers 36 and 37 in the fixing section 35, so that the transferred toner image is fixed.

Ozone generated within the facsimile apparatus is adsorbed on an ozone adsorption filter 47 and diffused by an ozone diffusing fan 48 for release.

The optical signal generating section 42 is disposed above the fixing section 35 and the electrophotographic process section 31 juxtaposed to each other, and the scanner section 12 is disposed above the optical signal generating section 42. This requires for the facsimile apparatus to be high, which is detrimental to a reduction in the size. Further, since the optical signal generating section 42 is disposed above the fixing section 35, the heat generated in the fixing section 35 has an adverse effect on the optical signal generating section 42. For example, when a position of a rotation axis of the polygon mirror 44 in the optical signal generating section 42 is deviated even to a small extent by the heat, a path of the optical signal remarkably inclines, which causes lines in the main scanning direction on the photosensitive drum 34 to be remarkably deviated.

Accordingly, an object of the present invention is to provide a facsimile apparatus which enables a reduction in the height of the apparatus body and avoidance of the influence of heat generated in a fixing section on an optical signal generating section.

According to the present invention, there is provided a facsimile apparatus comprising a scanner section adapted for reading a document, an electrophotographic process section including a photosensitive drum and adapted for feeding a toner to the photosensitive drum, an optical signal generating section adapted for applying an optical signal corresponding to an image of the document to the photosensitive drum in the electrophotographic process section, and a fixing section adapted for fixing on recording paper the toner transferred onto the recording paper by the photosensitive drum, wherein the optical signal generating section and the scanner section are juxtaposed to each other in a horizontal direction and the electrophotographic process section and the fixing section are juxtaposed to each other at a position below the optical signal generating section and the scanner section.

According to the present invention, since the electrophotographic process section and the fixing section are juxtaposed to each other at a position below the optical signal generating section and the scanner section, the height of the apparatus body may be small as opposed to the conventional apparatus wherein the optical signal generating section is disposed above the fixing section and the electrophotographic process section, and the scanner section is disposed above the optical signal generating section.

In another embodiment of the present invention, the electrophotographic process section is disposed below the optical signal generating section and the fixing section is disposed below the scanner section.

According to the present invention, since the optical signal generating section is disposed above the electrophotographic process section, the influence of heat generated in the fixing section can be avoided.

Fig. 1 illustrates one embodiment of the facsimile apparatus according to the present invention; and

Fig. 2 illustrates a conventional facsimile apparatus.

An embodiment of the present invention will now be described in more detail by way of the accompanying drawings.

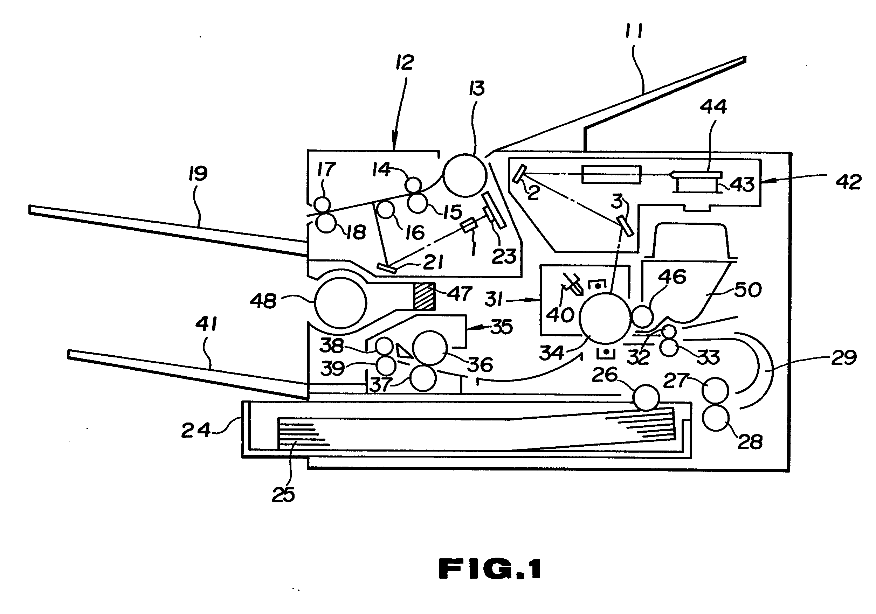

Fig. 1 is a cross-sectional view of one embodiment of the facsimile apparatus according to the present invention. In this figure, portions having the same function as that of corresponding portions of the conventional apparatus shown in Fig. 2 are respectively designated by the same numerals for simplification of explanation of the invention.

In this embodiment, an optical signal generating section 42 is disposed above an electrophotographic process section 31, and a scanner section 12 is disposed above a fixing section 35. The electrophotographic process section 31 and the fixing section 35 have respectively the same internal structures as those of the conventional apparatus shown in Fig. 2.

In the scanner section 12, a lens having a small focal length is used as a lens 1 located between a mirror 21 and a charge-coupled device image sensor (hereinafter referred to as "CCD image sensor") 23. Thus, the angle of visibility of a main scanning direction to a document from CCD image sensor 23 is ensured, and further the length of the scanner section 12 is shortened in a horizontal direction by the degree of reduction in the focal length of lens 1. The shortening of the length in the horizontal direction of the scanner section 12 provides a space on the right side of the scanner section 12, i.e., above the electrophotographic process section 31, and the optical signal generating section 42 is disposed in the space.

In optical signal generating section 42, an optical signal reflected by a polygon mirror 44 is reflected by a first mirror 2 and further reflected by a second mirror 3, and then guided to the photosensitive drum 34. This enables the optical path length of the optical signal to be sufficiently ensured. Therefore, there is no possibility that the scanning distance in the main scanning direction on the photosensitive drum 34 is shortened. Further, the optical path of the optical signal is bent twice, i.e., by the first mirror 2 and the second mirror 3, which makes it possible to shorten the length in the horizontal direction of the optical signal generating section 42. This enable the optical signal generating section 42 to be easily housed in the space above the electrophotographic process section 31.

Thus, the fixing section 35 and the electrophotographic process section 31 are disposed below the scanner section 12 and the optical signal generating section 42, respectively.

It is apparent that the above-described structure enables the height of the apparatus body of this embodiment to be reduced by the height of optical signal generating section 42 of the conventional apparatus as shown in Fig. 2. Therefore, it is possible to realize a reduction in the size of the facsimile apparatus.

Further, since optical signal generating section 42 is located away from fixing section 35, the influence of heat generated in fixing section 35 on a rotary optical system can be avoided. Specifically, it is possible to avoid occurrence of such a phenomenon that the heat generated in fixing section 35 is directly transferred to optical signal generating section 42 or heated air ascending from fixing section 35 surrounds optical signal generating section 42. Scanner section 12 is located above fixing section 35 and therefore cannot avoid the influence of the heat. However, there occurs no significant disorder of the optical system because no rotary optical system is used in this section.

As described above, according to this embodiment, juxtaposition of the optical signal generating section and the scanner section to each other in the horizontal direction and juxtaposition of the electrophotographic process section and the fixing section to each other below the optical signal generating section and the scanner section enable the height of the apparatus body to be reduced. Further, the influence of the heat generated in the fixing section on the optical signal generating section can be avoided in such a manner that the optical signal generating section is not disposed above the fixing section.

Claims

1. A facsimile apparatus comprising a scanner section (12) for reading a document, an electrophotographic process section (31) including a photosensitive drum (34) and adapted for feeding a toner to the photosensitive drum (34), an optical signal generating section (42) for applying an optical signal corresponding to an image of the document to the photosensitive drum (34), and a fixing section (35) for fixing on recording paper the toner transferred on the recording paper by the photosensitive drum (34),

characterized in that the optical signal generating section (42) and the scanner section (12) are juxtaposed to each other in a horizontal direction and the electrophotographic process section (31) and the fixing section (35) are juxtaposed to each other at a position below the optical signal generating section (42) and the scanner section (12).

2. A facsimile apparatus according to claim 1, characterized in that the electrophotographic process section (31) is disposed at a position below the optical signal generating section (42) and the fixing section (35) is disposed at a position below the scanner section (12).

FIG.1

**FIG.2**
*(PRIOR ART)*

EP 0 389 285 A2